# EUROPEAN PATENT APPLICATION

(11) **EP 0 911 720 A1**
(43) Date of publication of application: **28.04.1999**
(21) Application number: 97308459.3
(22) Date of filing: 23.10.1997
(51) Int. Cl.: G06F 3/033

(54) **User input device**

(71) Applicant: Hewlett-Packard Company, Palo Alto, California 94304 (US)
(72) Inventor: Hull, Richard, Dr., Westbury-on-Trym, Bristol BS9 3QS (GB)
(74) Representative: Lawrence, Richard Anthony

(57) **Abstract**

A device for providing user input to a computer device 20 comprises a digitiser 2,3 operable in a first mode to provide point and click control of a user interface of a computer device and operable in a second mode to provide keystroke entry to a user interface of a computer device. Switching means 11 enables a user to switch between the first mode and the second mode of the digitiser; and signals output from the digitiser are output from a serial port 17 to the computer device 20. The device 1 is adapted to be handheld in use and physically separate from the computer device 20 to which user input is to be provided. Keystroke entry is provided by handwriting input to the digitizer.

## Description

The present invention relates to a device to allow a user to make inputs to the user interface of a computer. The present invention relates specifically to devices which are handheld in use and are physically separate from the computer device to which the input is to be provided.

The handheld device does not itself comprise the computer device - the device of the invention is thus not a palmtop computer or personal digital assistant (PDA) which comprises input means to allow input and control of the device itself. "Physically separated" indicates that the device and the computer device are not an integrated whole (as in a palmtop computer). The complete absence of a physical connection between the two will in most cases be advantageous, but this is not an essential feature of such devices. For example, devices of the type here discussed could contain a wire connection to allow communication between the device and the computer device. Clearly, some form of communication link between the user input device and the computer device is required.

The term "computer device" relates to any data processing device which possesses a form of user interface. While devices of the type discussed here may be particularly appropriate for use with personal computers, network computers, set-top boxes or workstations, they are also usable with computer devices of different types which also have user interfaces. For example, office and home appliances such as printers, televisions and video recorders may contain means to allow programming and operation through a user interface - such appliances are also computer devices with which devices of the type here described are usable.

The commonest conventional forms of devices to allow user input to a computer are the mouse and the keyboard. Keyboards are the main means used to deliver text and other keystroke-type information to a computer. Alternative systems include voice recognition and handwriting recognition (with input provided through digitizer and stylus). The mouse is the most commonly used means for selection of options in a user interface, as it allows versatile interaction with an information screen, particular of the desktop and folder type used in the Apple Macintosh and the Microsoft Windows operating systems. Mouse-like devices such as trackballs,and also keyboards, can be used for this purpose too.

It is known to provide a combination of keystroke-entry type device (as exemplified by a keyboard) and pointer-type device (as exemplified by a mouse) together, particularly by use of a digitiser. An early example is set out in "Penpad", Gareth Jefferson, Personal Computer World, vol. 7, no. 10, pages 144-5, 1984, which describes a device then produced by Pencept Inc. of Waltham, Massachusetts, USA. This device comprises a large free-standing digitiser tablet and a dedicated processor - a region of the tablet is used for entry of handwritten characters, and mouse-type input is also provided separately with the same digitiser arrangement. This arrangement is however an expensive one, and the device is essentially no more versatile than the normal combination of keyboard and mouse.

It is naturally desirable for user input devices to be cheap. It is also desirable to have user input devices which are portable and even handheld, for use in environments where the conventional configuration of a user seated at a desk which supports a display screen, keyboard and mouse is an inappropriate one. Such an environment may be recreational World Wide Web browsing, where the user may prefer images to be presented on a television and viewed from an armchair (where the computer device may be a set-top box with a functionality substantially less than that of a conventional personal computer), or conferencing or giving of presentations where one or more people are running an application while speaking or interacting visually with others.

Handheld computers are well known. Palmtop computers and PDAs are available both as independent computers, and as computers interconnected in a local area network (LAN) both with other handheld computers and with desktop computers (as developed, for example, in the ParcTab experiment of Xerox Corporation at Xerox PARC, which is discussed in the technical report Xerox B&W March 1995 P95-00050 entitled "The ParcTab Ubiquitous Computing Experiment", R. Want, B. Schilt, N. Adams, R. Gold, D. Goldberg, K. Peterson, J. Ellis and M. Weiser, which report is also available as Chapter 2 in "Mobile Computing", T. Imielinski, pp 45-100, Kluwer Publishing, 1997). However, these are devices capable of acting a remote terminals or as autonomous computers rather than input devices simply acting as a means of controlling a user interface to a physically distinct computer - such interface devices need in particular to be much cheaper to produce.

One approach to provide handheld data input is to provide a handheld input module which comprises means (such as a digitiser or a keyboard) for inputting data and a limited storage capacity, together with a base station connected to the computer into which the handheld module plugs - accordingly the user can enter data into the handheld module, and the data is downloaded to the computer when the module is plugged in to the base station. A device of this kind for use as a transaction terminal is disclosed in US Patent No. 5237487. Such an approach does not allow any significant control, let alone real-time control, of the user interface of the computer itself.

A different approach is set out in US Patent 4823294, which teaches use of a small keyboard adapted for single-hand use. This however only provides the features of a keyboard.

There is thus a need to develop a versatile handheld user interface device which is cheap to produce and convenient to use. An application for which such an input device is especially desirable is World Wide Web browsing (web browsing), particularly in systems using essentially a conventional television as the display.

Accordingly, the invention provides a device for providing user input to a computer device, comprising: a digitiser operable in a first mode to provide point and click control of a user interface of a computer device and operable in a second mode to provide keystroke entry to a user interface of a computer device; switching means to enable a user to switch between the first mode and the second mode of the digitiser; and means to transmit signals output from the digitiser to a computer device; wherein the device is adapted to be handheld in use and physically separate from a computer device to which user input is to be provided.

Devices of this kind are providable as input-only devices - information is provided to the computer device, but no information is received from it. Such a device can be provided at low cost, provides the desired input capabilities, and is extremely versatile. The combination of low cost and versatility renders this device extremely suitable for applications such as web browsing with a low cost computer, such as a "set-top" computer to allow web browsing on a television screen, or a network computer with less processing power than a conventional personal computer and, typically, a predetermined choice of applications. Web browsing is a particularly suitable application, as it typically requires heavy mouse usage and occasional text input - this suits the capabilities of devices according to the invention extremely well.

Preferably, the device is adapted to be held in the non-dominant hand of a user and used with a stylus held in the dominant hand. This may require separate left-handed and right-handed embodiments to be constructed. A preferred form of the device comprises a plurality of buttons, each adapted to lie under a digit of a user holding the device in use - the optimisation of such an arrangement for left and right hands will be different. One of these buttons advantageously provides the switching means. In point-and-click mode, buttons also advantageously provide the click input.

In particularly preferred embodiments, keystroke input is provided by handwriting input. It can be appreciated that alternative arrangements are possible within the scope of the invention, such as a screen of "soft keys" presented on a display integral with the digitiser, such that a key may be selected with a stylus, but it is considered that capability to receive handwritten input is especially advantageous. Preferably the handwritten input comprises characters for matching against a stored symbol set, and the stored symbol set to be used is determined with the one or more buttons - however, use of alternative forms of handwriting recognition is within the scope of the invention.

Advantageously, cost of the device itself is minimised by removal of the determination of mouse input or keystroke input to the computer device itself when the user input device is in use and forms part of a computer system with the computer device. The computer device then is adapted to receive information packets from the user input device, and outputs mouse events from point-and-click information packets and keyboard events from keystroke information packets. Construction of characters for recognition and the recognition itself are thus carried out in the computer device. An alternative available within the scope of the invention is for character recognition and event determination to be carried out in the user input device itself. This however leads to devices of greater cost, as more processing power is required in the user input device itself.

Specific embodiments of the invention are described below, by way of example, with reference to the accompanying drawings, of which:
Figure 1 shows a schematic diagram of a device according to the invention and its relationship to a personal computer with which it is configured to operate;
Figure 2 shows a block diagram representation of the hardware components of the device of Figure 1 and their interconnection;
Figure 3 shows an indication for a user of the modes of operation of the device of Figure 1;
Figure 4 shows a flowchart representation of software adapted for use within the device of Figure 1;
Figure 5 shows a flowchart representation of software adapted for use within the personal computer of Figure 1.

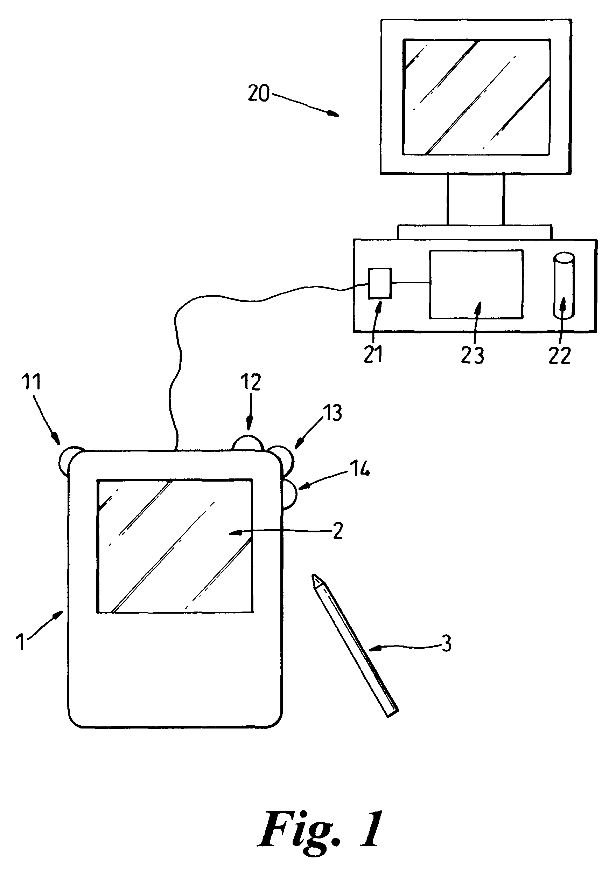

Figure 1 shows an embodiment of a device according to the invention for providing user input to a computer device. The device 1 is adapted to be held in the non-dominant hand of a user - the device shown in Figure 1 is thus for a right-handed user. Central to the device is a digitiser, comprising a surface 2 and used with a stylus 3 (to be held in the user's dominant hand) and appropriate electrical circuitry. The digitiser may be of any conventional type: the digitiser shown here acts through resistive contact, though the other common type (capacitive) can easily be used instead with appropriate minor modifications to the methods indicated. Numerous conventional digitiser designs are appropriate for this use. The digitiser is adapted to be operable in a first mode to provide point and click control of an interface of a computer device and operable in a second mode to provide keystroke input to a user interface of a computer device. In this embodiment, the computer device is personal computer 20, but in alternative embodiments the computer device could be a set-top processor for connection to the internet and display on a conventional television, a network computer, a part of a distributed computer device, or any form of appliance comprising a computer processor that has some form of user interface (such an appliance need not be anything conventionally regarded as a "computer peripheral", but may be an item of consumer electronics such as a video recorder or a hi-fidelity sound reproduction apparatus, another consumer item such as a microwave oven, or a piece of industrial or commercial equipment). The personal computer 20 has an input port 21 for receiving signals from the handheld device 1, a central processor 23, and a memory 22.

The provision of point-and-click and keystroke inputs are described in detail below. In addition to the digitiser, there are also provided buttons 11,12,13,14. Of these, button 11 provides a switching means to enable a user to switch between a first mode and a second mode of the digitiser. The remaining buttons 12,13,14 are used to complement digitiser input in both point-and-click and keystroke input modes. Again, the functional significance of each of the buttons is discussed in detail below. Each button is adapted to lie beneath a different digit of the non-dominant hand of the user. The mode switching button 11 lies beneath the thumb of the user in use, whereas buttons 12,13,14 lie beneath the index, middle and ring fingers (first, second and third fingers) respectively. A button press can thus be achieved with a small, natural motion of the relevant finger while holding the device.

Alternative embodiments of the invention can employ alternative forms of switch to achieve the functions of buttons 11, 12, 13, 14 by appropriate movement or positioning of the non-dominant hand with respect to the device. For example, the requisite switching may be achieved by touch-sensitive regions of the device surface, or by interruption of light beams, activated by fingers of the non-dominant hand or by other forms of hand positioning.

Means are provided to enable signals to be output from the device to the computer device. This may be done through a simple serial link, such as RS-232. Any form of linkage appropriate to communication between a device and a physically separate computer devices can be employed - the link may comprise a wire, or may be wireless (using, for example, infra-red or radio signals). In the embodiment described here, it is necessary only for signals to be output from the user input device to the computer device - the functionality of the user input device is such that there is no requirement for signals to be received from the computer device.

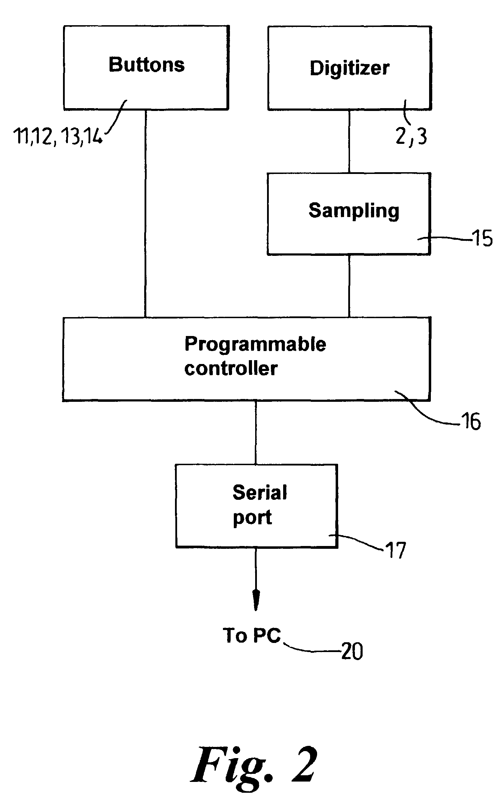

Figure 2 shows the hardware comprising the handheld device 1 and its functional interconnection. As indicated above, the user inputs are buttons 11,12,13,14 and the digitizer pen 3 and surface 2. These inputs are received and rendered into the appropriate form of signal by programmable controller 16. To provide useful digitizer signals at the programmable controller 16, sampling means are provided to provide a stream of sampled digitizer positions from the digitizer surface 2. This is a conventional arrangement generally used in digitizer surfaces adapted for receiving user inputs such as text: such an arrangement is shown in the "Penpad" article discussed above. The programmable controller 16 is configured to provide suitable outputs to the personal computer 20 through a serial port 17. Processing of the user inputs to provide appropriate device outputs is achieved through software further discussed below.

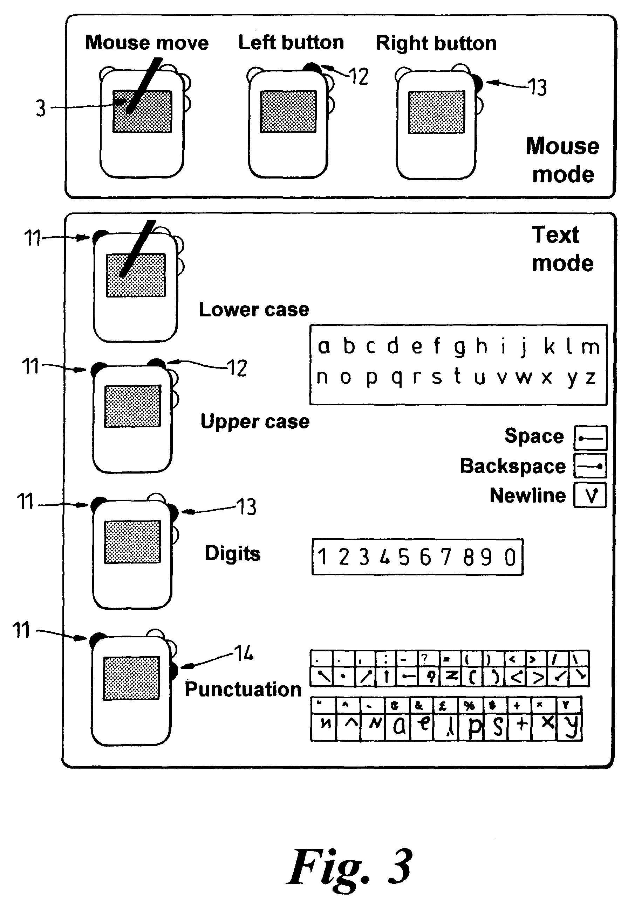

Figure 3 illustrates the functionality of the handheld device 1 in use. Switching between the point-and-click mouse mode and the keystroke entry mode is achieved through button 11. If button 11 is not pressed, the device is in mouse mode. Movement of the stylus thus corresponds to movement of a pointer on the display of personal computer 20. The click functions are achieved by buttons 12 and 13. Button 12 corresponds in function to the left hand button of a conventional two button mouse, and button 13 corresponds in function to the right hand button of a conventional two button mouse. Other forms of mouse can be replicated appropriately - for example, a three button mouse can be emulated by also using button 14.

In this embodiment of the invention, keystroke input is provided by handwritten characters input through the digitizer and subsequently recognised. A variety of alternatives are available for recognition of handwriting, the most computationally efficient of which involve use of specific languages having symbol sets defined in terms of stylus movements. A general discussion of handwriting recognition indicating some alternative choices available is provided in the paper "The State of the Art in On-Line Handwriting Recognition" by Charles C. Tappert, Ching Y. Suen and Toru Wakahara in IEEE Transactions on Pattern Analysis and Machine Intelligence, Vol. 12, No. 8, pages 787 to 808, August 1990. Particularly well adapted to use in PDAs and devices such as handheld device 1 are alphabets such as "Unistroke" devised by Xerox Corporation. A basic discussion of such an alphabet is provided in "Touch-Typing With a Stylus" by David Goldberg and Cate Richardson in the Proceedings of InterCHI '93, pages 80 to 87. A further alphabet of this general type is "Allegro", provided in a form directly usable with devices such as handheld device 1 by Papyrus Associates, Inc., 21 Wayside Rd., Westborough, MA 01581, USA. The handwritten characters shown in Figure 3 are characters of the Allegro alphabet. Embodiments of the handheld device 1 are configured so that keystroke entry is provided by this Allegro alphabet. Each character is entered by an appropriate single stroke of the stylus: control characters and a space are each entered by a specially chosen single stylus stroke.

If an alphabet such as Unistroke or Allegro is used, only relative little processing power is required for provision of keystroke events in a form identical to that provided by a button press of a conventional keyboard. The recognition software is also not complex. It is, however, quite possible for no specific text entry alphabet to be used and for appropriate software to be provided to recognise general handwriting input, but this would require significantly greater processing power and software complexity. This would be a possible solution if recognition takes place in the computer, where additional processing power is readily available, but for embodiments in which recognition occurs in the device itself, this solution would be unattractive.

If button 11 is held down, the handheld device is in keystroke entry mode. If none of buttons 12, 13, 14 are pressed, then the device is configured for entry of lower case text - the most usual arrangement. If button 12 is pressed, then the device is adapted for entry of upper case text. If button 13 is pressed, the device is then adapted for entry of digits. Finally, if button 14 is pressed, then the device is adapted for entry of punctuation and symbols. As can readily be envisaged, further button combinations, or additional buttons, could be used to provide additional functionality. For example, means could be provided to allow use of different alphabets or classes of symbol. The different button presses (and potentially combinations of button presses) available correspond to different symbol sets of the language used. Reuse of a stylus stroke between symbol sets is possible - the same stylus stroke may signify "l" in lower case mode, "I" in upper case mode, and "1" in digit mode.

Although it is possible for a display to be provided as a part of surface 2, this is not necessary. It is advantageous in reducing the cost of the user input device for a display to be excluded. Generally, it will be desirable for the user to enter keystrokes without looking at the handheld device 1, but instead at the display of personal computer 20 or at a text under consideration by the user. Keystrokes can thus be entered in "head-up" fashion, in a manner substantially the same as touch-typing.

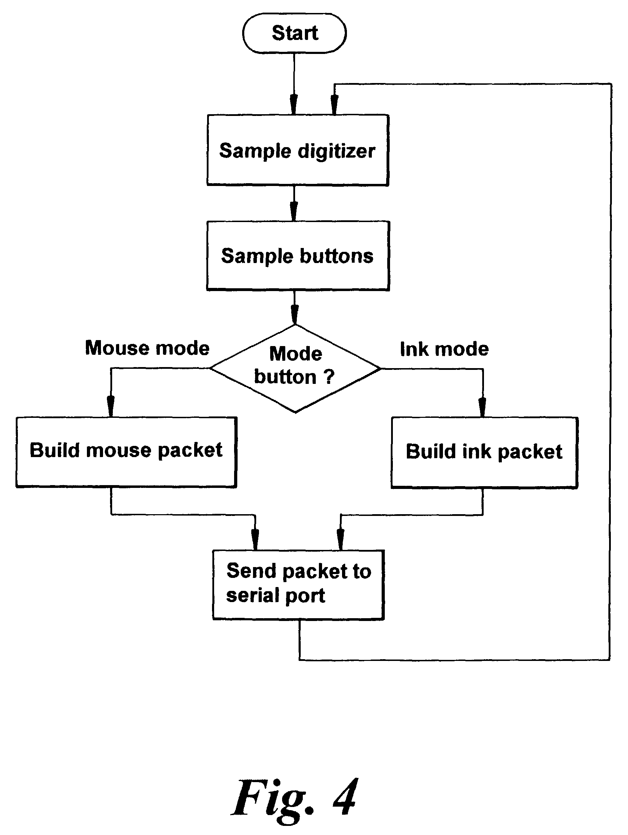

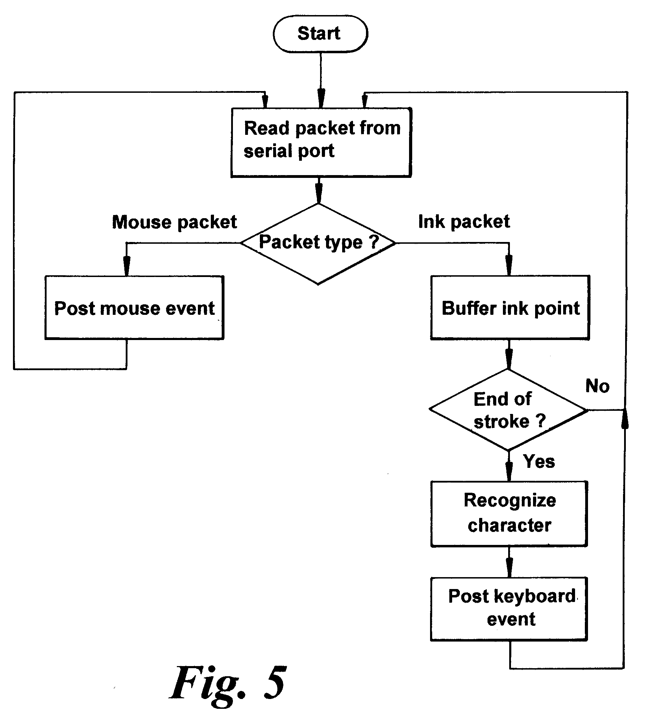

One embodiment of software to provide the necessary functionality of handheld device 1 when used together with personal computer 20 is shown in Figures 4 and 5. Figure 4 shows a basic software loop to be followed by the programmable controller 16. The loop begins with a sampled input from the digitizer from sampling means 15. This is followed by a sampling step to sample the present state of the buttons 11, 12, 13, 14. The next step taken is to determine the current state of the mode button 11. If the button 11 is not depressed, and the handheld device 1 is thus in mouse mode, the programmable controller 16 then builds a packet of information to provide to the personal computer 20 comprising digitizer and button information labelled for of a mouse action. If the button 11 is depressed, and the handheld device is thus in keystroke entry mode, the programmable controller 16 builds an information packet to send to the personal computer 20, with the digitizer and button information labelled for a keystroke. Each packet is labelled according to the type of information carried. The packet thus generated is sent to the serial port 17 of the handheld device 1 for onward transmission to the personal computer. Packets are provided by programmable controller 16 and hence transmitted from serial port 17 in a continuous stream at a rate of 100 packets per second, for reception and interpretation at personal computer 20: advantageously, packets are streamed only when the digitizer is in use or one or more of the buttons 11, 12, 13, 14 are pressed. An example of an information packet is shown in Table 1 below. It should be noted that the exact nature of information contained in the information packet is dependent on the hardware used. For a resistive digitizer, as used in the embodiment shown, new x and y coordinate values are only provided if the stylus 3 is in contact with the surface 2, and if the stylus_state is UP then the previous coordinate values are returned. For a capacitive digitizer, new coordinate values may be provided even if stylus_state is UP.

**Table 1**

| Packet Component | Possible value | Notes |
|---|---|---|
| state_of_button_0 | UP/DOWN | Mode switch - button 11 |
| state_of_button_1 | UP/DOWN | Button 12 |
| state_of_button_2 | UP/DOWN | Button 13 |
| state_of_button_3 | UP/DOWN | Button 14 |
| x-coordinate of stylus | 0 - 2048 | |
| y-coordinate of stylus | 0 - 2048 | |
| stylus_state | UP/DOWN | Used to indicate end of character |

Figure 5 shows the main software loop followed by the processor of the personal computer. The first step taken is to read the packet received at the serial port. The next step taken is to assess whether the packet is a mouse packet to form a mouse event or an ink packet to form part of a keystroke event. If the packet is a mouse packet, the next step is to post the information received as a mouse event in the same manner as would occur for input from the equivalent conventional mouse (after, if necessary, interpreting the input received from handheld device 1 to determine the intended mouse event). The loop then reverts to waiting for the next packet.

If the packet is an ink packet, rather than a mouse packet, the next step is to add the ink packet, interpreting the data such that the new ink packet can be integrated with earlier, and subsequently also later, ink packets intended to form a part of the same character. This is done by adding the x and y coordinates of the ink packet to an ink buffer. The buffer thus contains stream of x,y coordinate pair datapoints ordered in the sequence in which they were added to the ink buffer. The software loop then returns to the top, and datapoints are added to the ink buffer until the keystroke has ended. The user ends a keystroke by lifting the stylus 3 from the surface 2: this is signalled in the ink packet by stylus_state becoming UP, stylus_state having been DOWN throughout entry of the character. Once the keystroke has ended, the step of attempting to recognize the input keystroke follows - if the language Allegro is used, for example, this step can be achieved with the proprietary recogniser for Allegro sold as a product by Papyrus Associates, although as the skilled person will readily appreciate, any appropriate product may be used here to recognise the input electronic ink. Once a keystroke is recognised as a character in this step, it is then posted as a keystroke event in exactly the same fashion as the same character would be posted if received as a conventional keyboard event. The ink buffer is then cleared, ready to be filled again when the stylus 3 is returned to the digitizer surface 2 (so stylus_state will again return DOWN) provided that device 1 is still in keystroke entry mode.

If the mode button 11 is released in the middle of an intended keystroke, the part of the stylus action up until the release of the mode button is transmitted as ink packets and is input into the ink buffer, and the part of the stylus action after the release of the mode button 11 is transmitted as mouse packets. Once a mouse packet is received after a stream of ink packets, this is also recognized as the end of a keystroke and character recognition occurs (not shown in Figure 5). Under these circumstances, or under the inadvertent lifting of the stylus 3 from the surface 2 in the middle of the keystroke, an incomplete keystroke is likely to result: this may be recognized as a character other than that intended by the user, or if unrecognizable a special code or character (typically a "?" may be returned). The text entered can easily be corrected thereafter.

The interpreted mouse and keystroke events received from the handheld device 1 are then provided to the standard interface of the computer for conventional mouse and keystroke events. The man skilled in the art will readily appreciate how this can be achieved in any appropriate case. For example, in Microsoft Windows, this is achieved by posting messages to the operating system's message queue corresponding to mouse events (button_up, button_down, move) or keypress events.

It will be appreciated that alternative software structures may be employed instead of the above. The above structure is advantageous, as it places minimal demands on the handheld device 1 as regards memory and processing power. However, alternative systems can be devised which have greater processing power in the handheld device - in these cases, one or more of mouse event preparation, character recognition, and keystroke event preparation may be provided at the handheld device itself. In the embodiment described above, there is no requirement for information to be passed from the computer device to the user input device - however, if a greater part of the user interface function is delegated to the user input device, means to allow provision of signals from the computer device to the user input device may be required.

## Claims

1. Device for providing user input to a computer device, comprising:
a digitiser operable in a first mode to provide point and click control of a user interface of a computer device and operable in a second mode to provide keystroke entry to a user interface of a computer device;
switching means to enable a user to switch between the first mode and the second mode of the digitiser; and
means to transmit signals output from the digitiser to a computer device;
wherein the device is adapted to be handheld in use and physically separate from a computer device to which user input is to be provided.

2. Device as claimed in claim 1, wherein the device is adapted to be held in the non-dominant hand of a user and for use with a stylus held in the dominant hand of a user.

3. Device as claimed in claim 1 or claim 2, wherein one or more buttons are provided, each to lie under a digit of a user holding the device for use.

4. Device as claimed in claim 3, wherein the one or more buttons provide the switching means.

5. Device as claimed in claim 3 or claim 4, wherein the one or more buttons provide the click entry of the point and click interface.

6. Device as claimed in claim 5, wherein the device is adapted in the first mode to output an information packet comprising position information from the digitiser and click information from the buttons.

7. Device as claimed in any preceding claim, wherein the device is adapted for input of keystrokes as handwritten characters.

8. Device as claimed in claim 7, wherein the input of keystrokes as handwritten characters is for matching against a stored symbol set.

9. Device as claimed in claim 8, wherein a secondary switching means is provided for determining the stored symbol set against which the handwritten input is matched.

10. Device as claimed in claim 9, wherein the one or more buttons provide the secondary switching means.

11. Device as claimed in claim 10, wherein the device is adapted in the second mode to output an information packet comprising ink information from the digitizer and symbol set information from the one or more buttons.

12. Computer system comprising a computer device having means for processing data and a user interface thereto, and further comprising a device for providing user input as claimed in any of claims 1 to 11 for providing user input to said user interface, wherein the computer device further comprises means for receiving signals output from the device for providing user input.

13. Computer system as claimed in claim 12 where dependent on claim 6 , wherein the computer system comprises means to recognise an information packet received from the device for providing user input as containing mouse information and outputting a mouse event therefrom.

14. Computer system as claimed in claim 12 or 13 where dependent on claim 10, wherein the computer system comprises means to recognise an information packet received from the device for receiving user input as containing handwriting information, and for assembling a character therefrom and recognising the character against a symbol set indicated by the symbol set information.
